(19) Europäisches Patentamt
European Patent Office
Office européen des brevets

(11) **EP 4 769 517 A1**

(12) **EUROPEAN PATENT APPLICATION**
published in accordance with Art. 153(4) EPC

(43) Date of publication:
**01.07.2026 Bulletin 2026/27**

(21) Application number: **24875010.1**

(22) Date of filing: **04.10.2024**

(51) International Patent Classification (IPC):
$H01M\ 4/131^{(2010.01)}$    $H01M\ 4/1391^{(2010.01)}$
$H01M\ 4/525^{(2010.01)}$    $H01M\ 4/505^{(2010.01)}$
$H01M\ 4/62^{(2006.01)}$     $H01M\ 4/04^{(2006.01)}$
$H01M\ 10/052^{(2010.01)}$   $H01M\ 4/02^{(2006.01)}$

(52) Cooperative Patent Classification (CPC):
H01M 4/02; H01M 4/04; H01M 4/131;
H01M 4/1391; H01M 4/505; H01M 4/525;
H01M 4/62; H01M 10/052; Y02E 60/10

(86) International application number:
**PCT/KR2024/015140**

(87) International publication number:
**WO 2025/075455 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.10.2023 KR 20230133821**

(71) Applicant: **LG ENERGY SOLUTION, LTD.
Seoul 07335 (KR)**

(72) Inventors:
• **OH,, Sol Seon
Daejeon 34122 (KR)**

• **KWAK, Sang Min
Daejeon 34122 (KR)**
• **HAN, Seung Hee
Daejeon 34122 (KR)**
• **KANG, Seong Wook
Daejeon 34122 (KR)**
• **LEE, Nam Jeong
Daejeon 34122 (KR)**
• **HAN, Jae Sung
Daejeon 34122 (KR)**
• **KWON, Soon Hyung
Daejeon 34122 (KR)**

(74) Representative: **Hoffmann Eitle
Patent- und Rechtsanwälte PartmbB
Arabellastraße 30
81925 München (DE)**

(54) **ELECTRODE COMPOSITE FILM, MANUFACTURING METHOD THEREFOR, AND LITHIUM SECONDARY BATTERY COMPRISING SAME**

(57)    The present invention provides an electrode composite film comprising: an electrode active material containing lithium iron phosphate; a conductive material; and a fibrillizable binder, wherein the thickness variation obtained from thickness measurement results of a plurality of arbitrary points is 1.5% or less, and the weight variation obtained from weight measurement results of a plurality of arbitrary points is 1.5% or less.

**Description**

**TECHNICAL FIELD**

**Cross-reference to Related Applications**

This application claims the benefit of Korean Patent Application No. 10-2023-0133821, filed on October 6, 2023, in the Korean Intellectual Property Office, the contents of which are incorporated herein by reference.

**Technical Field**

The present invention relates to an electrode composite film, a method for manufacturing the same, and a lithium secondary battery comprising the same.

**BACKGROUND ART**

Secondary batteries are used in small products such as digital cameras, P-DVDs, MP3Ps, mobile phones, PDAs, portable game devices, power tools and e-bikes, as well as large products requiring high output such as electric vehicles or hybrid vehicles, power storage devices that store surplus power generation or renewable energy, and power storage devices for backup.

Usually, secondary batteries are manufactured by applying an electrode active material slurry to a positive electrode current collector and a negative electrode current collector to form electrode active material layers, performing drying and rolling processes to manufacture a positive electrode and a negative electrode, laminating the electrodes on both sides of a separator to form an electrode assembly of a predetermined shape, accommodating the electrode assembly in a battery case, injecting an electrolyte, and sealing.

Meanwhile, during the drying process of the electrode active material slurry, a solvent contained in the slurry may evaporate, causing defects such as pinholes or cracks in the electrode active material layer formed on the current collector. In addition, since the inside and outside of the electrode active material slurry are not uniformly dried during the drying process, there is a concern that powder floating phenomenon due to the difference in solvent evaporation rate, that is, the powder in an area that dries first rises and forms a gap with an area that dries relatively later, which may deteriorate electrode quality.

In order to solve the problem, a drying device that may control a solvent evaporation rate so that the inside and outside of the electrode active material slurry may be uniformly dried is being considered, but such a drying device is very expensive and requires considerable cost and time to operate, which is disadvantageous in terms of manufacturing processability.

On the other hand, a solvent included in a typical electrode active material slurry is N-methyl-2-pyrrolidone (NMP), which has a high boiling point, so requires high heat energy and a very long drying furnace to dry, which is very disadvantageous for mass production. In addition, N-methyl-2-pyrrolidone (NMP) is a toxic substance and is harmful to living organisms, which is disadvantageous in being not environmentally friendly.

Accordingly, research on dry electrodes, by which electrodes are manufactured without using a solvent has been actively conducted recently. The dry electrode is generally manufactured by laminating a free-standing type electrode composite film manufactured in the form of a sheet and including an electrode active material, a binder, a conductive material, or the like, onto a current collector. The electrode composite film is manufactured by including a process of first mixing an electrode active material, a carbon material as a conductive material, and a fiberizable binder together using a blender or the like, applying a shear force through a process such as jet milling or kneading to fiberize the binder, and then calendering the obtained mixture into a film form to manufacture a free-standing film.

Meanwhile, in the conventional electrode composite film manufacturing process, an electrode powder is fed into a high-temperature calendering roll to manufacture an electrode composite film, but the electrode composite film manufactured in this way has a problem that battery characteristics are deteriorated due to low uniformity in thickness and weight.

Therefore, the development of an electrode composite film that may achieve uniform battery characteristics by having high uniformity in thickness and weight is required.

**DISCLOSURE OF THE INVENTION**

**TECHNICAL PROBLEM**

The present invention is to solve the problems and provides an electrode composite film having low thickness deviation and weight deviation, a method for manufacturing the same, and a lithium secondary battery including the same.

**TECHNICAL SOLUTION**

[1] The present invention provides an electrode composite film comprising an electrode active material comprising lithium iron phosphate, a conductive material, and a fiberizable binder, wherein a thickness deviation obtained from thickness measurement results at a plurality of arbitrary points is 1.5% or less, and a weight deviation obtained from weight measurement results at a plurality of arbitrary points is 1.5% or less.

[2] In the present invention of [1], the thickness deviation may be 1.0% or less.

[3] In the present invention of [1] or [2], the weight deviation may be 1.0% or less.

[4] In the present invention of at least one of [1] to [3], a tensile strength of the electrode composite film may be 0.30 MPa to 1.30 MPa.

[5] In the present invention of at least one of [1] to [4], the lithium iron phosphate may be represented by Formula 1 below.

$$[\text{Formula 1}] \qquad Li_{1+x1}[Mn_{1-a1-b1}Fe_{a1}M^1_{b1}]PO_4$$

In Formula 1, $M^1$ comprises one or more selected from the group consisting of Al, Mg, Ni, Co, Ti, Ga, Cu, V, Nb, Zr, Ce, In, Zn and Y, $-0.1 \leq x1 \leq 0.1$, $0.5 \leq a1 \leq 1.0$, and $0.0 \leq b1 \leq 0.1$.

[6] In the present invention of at least one of [1] to [5], an average particle diameter of the electrode active material may be 0.1 $\mu$m to 3.0 $\mu$m.

[7] In the present invention of at least one of [1] to [6], the electrode active material may have a BET specific surface area of 0.5 $m^2$/g to 30 $m^2$/g.

[8] In the present invention of at least one of [1] to [7], the fiberizable binder may comprise polytetrafluoroethylene (PTFE).

[9] The present invention provides a method for manufacturing an electrode composite film, comprising: (S1) a step of preparing an electrode powder comprising an electrode active material comprising lithium iron phosphate, a conductive material and a fiberizable binder; and (S2) a step of calendering the electrode powder with a temperature difference between the electrode powder and a calendering roll of 60°C or less, wherein the temperature of the electrode powder is 30°C to 100°C, and the temperature of the calendering roll is 30°C to 90°C.

[10] In the present invention of [9], the temperature of the electrode powder may be 60°C to 80°C.

[11] In the present invention of [9] or [10], the temperature of the calendering roll may be 60°C to 80°C.

[12] In the present invention of at least one of [9] to [11], a surface roughness (Ra) of the calendering roll may be 0.01 $\mu$m to 0.10 $\mu$m.

[13] In the present invention of at least one of [9] to [12], the calendering may be performed by injecting the electrode powder into a roll press part comprising a plurality of the calendering rolls, and a force applied between the calendering rolls may be 50 kg/cm to 500 kg/cm.

[14] In the present invention of at least one of [9] to [13], the calendering may be performed by injecting the electrode powder into a roll press part comprising a plurality of the calendering rolls, and a gap between the calendering rolls may be 10 $\mu$m to 300 $\mu$m.

[15] The present invention provides a lithium secondary battery comprising the electrode composite film of [1] above.

**ADVANTAGEOUS EFFECTS**

The electrode composite film according to the present invention is characterized by having improved uniformity of thickness and weight. Therefore, the concentration of local electrode reaction due to the uneven thickness and weight of the electrode composite film may be prevented, and non-uniform discharge capacity may be improved.

**BEST MODE FOR CARRYING OUT THE INVENTION**

Hereinafter, the present invention will be explained more particularly.

Words or terms used in the present description and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

In this specification, a "composite composition" means a mixture including an electrode active material, a conductive material, and a fiberizable binder, which is physically mixed to form a uniform dispersion phase, and may be a powder mixture as a product of a mixing process according to this specification, and may be substantially free of solvent. Here, substantially free of solvent means that no solvent is added or only a very small amount of solvent is added during mixing the composite composition.

In this specification, a "mixed aggregate" means a mixture in which the composite composition is subjected to a shear force, the binder is fiberized, and the powder mixture is combined or connected to each other to form a paste state aggregate, and may be a product of a kneading process according to this specification, and may have a solid content of 100%.

In this specification, an "electrode powder" means a material in a powder state in which the mixed aggregate is pulverized to form a smaller particle size and includes an electrode active material and a binder, and optionally a conductive material.

In this specification, an "electrode composite film" may mean a free-standing type single sheet-type electrode composite layer manufactured using an "electrode composite" including an electrode active material, a conductive material, and a binder without the involvement of a solvent, or in a state where the electrode composite layer is laminated on a current collector. The term "free-standing" in this specification means that may maintain a single form without relying on other members and may move or handle by itself. The electrode composite film may be formed by compressing the electrode powder as described later. For example, the electrode powder may have a layered structure formed by compressing.

In this specification, a "powder-sheeting film" means a film formed after the electrode powder is formed into a sheet form through a powder-sheeting process in which the electrode powder first passes through a rolling roll in a roll-to-roll process, and before the electrode powder passes through the last rolling roll in the process, and may be a free-standing sheet, but may be a sheet with relatively weak self-supporting force. Here, the "powder-sheeting" means that the electrode powder is formed into a free-standing sheet form by a rolling roll of a roll-to-roll process, and "sheeting" is a process performed in the process of manufacturing the powder-sheeting film into an electrode composite film, and may mean a process of rolling the powder-sheeting film.

In the present invention, a MD direction (Machine Direction) means the longitudinal direction of the electrode composite film, and a TD direction (Transverse Direction) means the width direction of the electrode composite film.

In the present invention, an "average particle diameter" means a particle diameter corresponding to 50% of the volume accumulation amount in a particle diameter distribution curve of the particles. The average particle diameter may be measured using, for example, a laser diffraction method. The laser diffraction method may generally measure particle diameters from the submicron range to several mm, and may obtain results with high reproducibility and high resolution.

In the present invention, a "BET specific surface area" is measured by a BET method, and may be specifically calculated from the nitrogen gas adsorption amount at liquid nitrogen temperature (77K) using BELSORP-mino II from BEL Japan Co.

As a result of continuous research to achieve uniform physical properties and excellent tensile strength of the electrode composite film, the inventors of the present invention found that if a temperature difference between the electrode powder and the calendering roll is controlled within a certain range while controlling the temperature of each of the electrode powder and the calendering roll, the uniformity of the thickness and weight of the electrode composite film may be improved while achieving excellent tensile strength, thereby completing the present invention.

Hereinafter, the present invention will be described in detail.

The electrode composite film according to the present invention, the method for manufacturing the same, and the lithium secondary battery including the same, include at least one of the configurations disclosed below, and may include any combination between technically possible configurations among the configurations below.

## Electrode Composite Film

Hereinafter, the electrode composite film according to the present invention will be explained.

The electrode composite film according to the present invention comprises an electrode active material comprising lithium iron phosphate, a conductive material, and a fiberizable binder, wherein a thickness deviation obtained from thickness measurement results at a plurality of arbitrary points is 1.5% or less, and a weight deviation obtained from weight measurement results at a plurality of arbitrary points is 1.5% or less.

In the conventional electrode composite film manufacturing process, an electrode composite film is manufactured by injecting electrode powder into a high-temperature calendering roll. However, if the electrode composite film is manufactured in a state where the temperature difference between the electrode powder and the calendering roll, and the temperature of each of the electrode powder and the calendering roll are not controlled within certain ranges, the uniformity of the thickness and weight of the electrode composite film is low, so that the electrochemical characteristics of a battery are deteriorated, and a process problem occurs in which a uniform electrode composite film may not be continuously manufactured. In addition, even if manufactured in a film form, problems of pinholes or breakage may occur, or uneven wave patterns may appear.

Accordingly, the present invention intends to provide an electrode composite film having high uniformity of thickness and weight and easy film formation by controlling the temperature difference between the electrode powder including lithium iron phosphate and the calendering roll and the temperature of each of the electrode powder and the calendering roll within certain ranges.

The thickness deviation obtained from the thickness measurement results of the plurality of arbitrary points is 1.5% or less. Preferably, the thickness deviation may be 1.4% or less, 1.3% or less, 1.2% or less, 1.1% or less, or 1.0% or less. If the thickness deviation exceeds 1.5%, the surface of the electrode composite film is uneven, so that the reaction between the electrode composite film and an electrolyte is limited, and the problem of increased resistance or voltage drop during battery operation occurs due to the minute space between the current collector and the electrode composite film. In addition, the electrode reaction is concentrated locally, causing a problem of non-uniform discharge capacity, and in severe cases, a problem of deteriorated safety occurs due to local precipitation of lithium metal. Therefore, if the range is satisfied, the surface of the electrode composite film is uniform, so that the reaction between the electrode composite film and the electrolyte may be excellent, and the space between the current collector and the electrode composite film is small, so that excellent resistance and output characteristics may be achieved, and local electrode reactions may be prevented, so that uniform discharge capacity and excellent safety may be achieved.

The weight deviation obtained from the weight measurement results of the plurality of arbitrary points is 1.5% or less. Preferably, the weight deviation may be 1.4% or less, 1.3% or less, 1.2% or less, 1.1% or less, or 1.0% or less. If the weight deviation exceeds 1.0%, the electrode active material is concentrated in a specific area, so that the energy density of the battery becomes uneven, and accordingly, the possibility of dendrite resin growth increases, so that the capacity of a battery decreases or the life performance decreases, and the initial life characteristics of the battery deteriorate. Therefore, if the range is satisfied, the energy density of the battery may be uniform, so that the initial life characteristics may be improved.

The thickness deviation and weight deviation obtained from the thickness or weight measurement results of the plurality of arbitrary points according to the present invention may be calculated by manufacturing a total of 5 samples by punching the electrode composite film in the MD direction 10 mm × TD direction 10 mm, and then measuring the thickness and weight of each sample. Specifically, in the case of the thickness deviation, the total of 5 thickness values measured in each sample may be calculated using Mathematical Equation A below.

Thickness deviation (%) = [{(maximum value among measured thicknesses) - (minimum value among measured thicknesses)} / {2 × (average value of measured thicknesses)}] × 100　　　[Mathematical Equation A]

In the case of the weight deviation, the total of 5 weight values measured in each sample may be calculated using Mathematical Equation B below.

Weight Deviation (%) = [{(maximum value among measured weights) - (minimum value among measured weights)} / {2 × (average value of measured weights)}] × 100　　　[Mathematical Equation B]

Accordingly, if the above ranges are satisfied, an electrode composite film of uniform quality may be manufactured, breakage of the electrode composite film may be prevented, excellent processability may be exhibited in mass or continuous processes, and resistance characteristics and life characteristics of the battery may be improved.

The tensile strength of the electrode composite film may be 0.30 MPa to 1.30 MPa, and preferably, 0.30 MPa or more, 0.35 MPa or more, 0.40 MPa or more, 0.45 MPa or more, 0.46 MPa or more, or 0.48 MPa or more, and 1.30 MPa or less, 1.20 MPa or less, 1.10 MPa or less, 1.00 MPa or less, or 0.90 MPa or less. If the range is satisfied, the electrode composite film is not torn or broken during manufacturing, so that excellent uniformity is exhibited, and thus excellent battery characteristics may be achieved, while contamination of the calendaring roll is not generated, so that excellent processability may be achieved. In addition, since an excessive amount of a binder is not included in the electrode composite film, the resistance is low, side reactions are small, and the lifespan may be excellent.

Meanwhile, in the present invention, the electrode composite film may have a porosity of 20 vol% to 50 vol%, specifically 20 vol% to 40 vol%, and more specifically 25 vol% to 35 vol%. If the above range is satisfied, electrolyte impregnation is excellent, so that life characteristics and output characteristics may be improved, and energy density may be excellent.

The porosity may be obtained by measuring the apparent density of the electrode composite film and using the actual density calculated based on the actual density and composition of each component by [Relational Equation 1] below.

Porosity (%) = [1 - {(apparent density) / (actual density)}] $\times$ 100                    [Relational Equation 1]

The electrode active material may include lithium iron phosphate. If the above conditions are satisfied, it is preferable in that excellent uniformity and tensile strength may be achieved, while also being able to achieve high thermal safety. In addition, if an electrode composite film is formed using the lithium iron phosphate, it is preferable in that excellent economic feasibility, life characteristics and stability may be achieved.

Preferably, the lithium iron phosphate may be represented by Formula 1 below.

[Formula 1]          $Li_{1+x1}[Mn_{1-a1-b1}Fe_{a1}M^1{}_{b1}]PO_4$

In Formula 1, $M^1$ includes one or more selected from the group consisting of Al, Mg, Ni, Co, Ti, Ga, Cu, V, Nb, Zr, Ce, In, Zn, and Y, preferably, one or more selected from the group consisting of Mg, Ti, V and Nb, more preferably, one or more selected from the group consisting of Ti and V. If the above conditions are satisfied, effects such as suppression of structural changes during repeated charging and discharging of a positive electrode active material may be obtained.

x1 is -0.1 to 0.1. If the range is satisfied, high capacity characteristics and high energy density per unit volume may be achieved.

a1 is a mole fraction of iron (Fe) among the total metals excluding lithium in the lithium iron phosphate, and is 0.5 to 1.0. Preferably, a1 may be 0.5 or more, 0.6 or more, 0.7 or more, 0.8 or more, or 0.9 or more, and more preferably, a1 may be 1.0. If the range is satisfied, it is preferable in that the electronic conductivity and lithium ion conductivity in the lithium iron phosphate are excellent, so that the output characteristics may be excellent, and an appropriate average particle diameter may be achieved.

b1 is a mole fraction of $M^1$ among the total metals excluding lithium in the lithium iron phosphate, and may be 0.0 to 0.1. Preferably, b1 may be 0.001 or more, 0.002 or more, 0.003 or more, 0.004 or more, 0.005 or more, 0.006 or more, 0.007 or more, 0.008 or more, or 0.009 or more, and may be 0.1 or less, 0.09 or less, 0.08 or less, 0.07 or less, 0.06 or less, 0.05 or less, 0.04 or less, 0.03 or less, 0.02 or less, or 0.01 or less. If the range is satisfied, ionic conductivity and electrical conductivity may be improved.

More preferably, Formula 1 may be represented by Formula 1-1 below.

[Formula 1-1]          $LiFePO_4$

The electrode active material may further include a coating layer including carbon disposed on the lithium iron phosphate. If the above conditions are satisfied, the electronic conductivity of a positive electrode material powder may be improved.

The content of carbon included in the coating layer including carbon disposed on the lithium iron phosphate may be 0.1 wt% to 5.0 wt% based on the total weight of the electrode active material, preferably 0.25 wt% to 4.0 wt%, and more preferably 0.5 wt% to 3.0 wt%. If the above range is satisfied, it may be preferable in that the electronic conductivity of the electrode active material may be improved while not acting as a resistor.

The average particle diameter of the electrode active material may be 0.1 $\mu$m to 3.0 $\mu$m, preferably 0.5 $\mu$m to 2.0 $\mu$m, and more preferably 0.6 $\mu$m to 1.5 $\mu$m. If the range is satisfied, excellent uniformity and tensile strength may be realized while also achieving excellent energy density.

The electrode active material may have a BET specific surface area of 0.5 $m^2$/g to 30 $m^2$/g, preferably 1 $m^2$/g to 20 $m^2$/g, and more preferably 5 $m^2$/g to 15 $m^2$/g. If the range is satisfied, excellent energy density and electrolyte impregnation property may be achieved while also achieving excellent uniformity and tensile strength.

The conductive material is a component for further improving the conductivity of the electrode active material, and the conductive material is not particularly limited as long as it does not cause a chemical change in a battery and has conductivity, and for example, carbon powder such as carbon black, acetylene black, Ketjen black, channel black, furnace black, lamp black, or thermal black; graphite powder such as natural graphite, artificial graphite, or graphite with a highly developed crystal structure; conductive fiber such as carbon fiber and metal fiber; fluorinated carbon powder; conductive powder such as aluminum powder and nickel powder; conductive whiskers such as zinc oxide, potassium titanate, or the like; conductive metal oxides such as titanium oxide; conductive materials such as polyphenylene derivatives may be used. Specifically, for uniform mixing of conductive materials and improvement of conductivity, one or more selected from the group consisting of activated carbon, graphite, carbon black, and carbon nanotubes (CNTs) may be included.

The fiberizable binder is not specifically specified as long as it is fibrillizable, and the fibrillation refers to a process of dividing a polymer into small pieces. For example, the fibrillation may be performed using a mechanical shear force, or the like, and the surface of the fibrillated polymer fiber is released to generate a large number of fine fibers (fibrils). The fiberizable binder may preferably include one or more selected from the group consisting of polytetrafluoroethylene (PTFE) and polyolefin, more preferably include polytetrafluoroethylene (PTFE), and even more preferably be polytetrafluoroethylene (PTFE). Specifically, the polytetrafluoroethylene (PTFE) may be included in an amount of 60 wt% or more based on the total binder weight. In this case, the binder may additionally include one or more of polyethylene oxide (PEO), polyvinylidene fluoride (PVdF), polyvinylidene fluoride-co - hexafluoropropylene (PVdF-HFP), and a polyolefin-based binder.

## Method for manufacturing Electrode Composite Film

Hereinafter, a method for manufacturing the electrode composite film will be explained.

The method for manufacturing an electrode composite film according to the present invention comprises (S1) a step of preparing an electrode powder including an electrode active material including lithium iron phosphate, a conductive material, and a fiberizable binder; and (S2) a step of calendering the electrode powder with a temperature difference between the electrode powder and a calendering roll of 60°C or less, wherein the temperature of the electrode powder is 30°C to 100°C, and the temperature of the calendering roll is 30°C to 90°C.

Next, each step will be described in more detail.

(Step (S1))

The electrode active material including lithium iron phosphate, the conductive material, and the fiberizable binder have been described above, so a detailed description thereof will be omitted, and the electrode powder including the electrode active material, the conductive material, and the fiberizable binder may be prepared as follows.

First, the electrode active material, the conductive material, and the fiberizable binder described above are mixed to obtain a composite composition. In this case, the mixing is performed so that the electrode active material, the conductive material, and the fiberizable binder may be uniformly distributed, and since they are mixed in a powder form, the mixing may be performed by various methods if simple mixing is possible, without limitation. However, since the present invention is manufactured as a dry electrode that does not use a solvent, the mixing may be performed by dry mixing, and the materials may be mixed by injecting the materials into a device such as a mixer or blender.

In this case, the mixing may be performed in a mixer at 100 rpm to 3000 rpm for 5 minutes to 60 minutes, and more specifically, at 600 rpm to 2000 rpm for 8 minutes to 20 minutes. If performed in the range, the materials may be uniformly mixed, thereby improving battery performance.

Next, a fiberization process may be performed on the composite composition obtained from the mixing to fiberize the fiberizable binder.

The fiberization process is not particularly limited if it is a generally performed mixing, but preferably, it may be performed by high temperature-low shear kneading (kneading), and may be performed by a kneading device, for example, a kneader. By the kneading, the fiberizable binder is fiberized, and the electrode active material and conductive powders are combined or connected to form a mixed aggregate having a solid content of 100%.

The kneading may be performed at a speed of 10 rpm to 100 rpm, and specifically, at a speed of 20 rpm to 70 rpm. In addition, the kneading may be performed for 1 minute to 120 minutes, and specifically, for 2 minutes to 60 minutes. If the above range is satisfied, appropriate fiberization may proceed, and the characteristics of a battery may be improved.

In addition, the kneading may be performed under conditions of a high temperature and a pressure equal to or higher than normal pressure, and specifically, under conditions of a pressure higher than normal pressure.

More specifically, the kneading may be performed at a temperature of 50°C to 230°C, preferably 90°C to 200°C. If kneading is performed at a high temperature such as the above range, the fiberization and lumping of the binder by kneading may be performed well, and the problem of the fiberized binder breaking may be properly prevented.

In addition, the kneading may be performed at a pressure higher than normal pressure, specifically 1 atm to 3 atm, more specifically 1.1 atm to 3 atm. If performed in the above range, the problem of the fiberized binder breaking may be properly prevented, and the problem of the density of the mixed aggregate becoming too high may be prevented.

That is, according to the present invention, if a high-temperature-low-shear mixing process is performed under high temperature and pressure conditions equal to or higher than normal pressure instead of high-shear mixing, the intended effect of the present invention may be achieved.

Next, a step of pulverizing the mixed aggregate manufactured through the kneading step to obtain an electrode powder may be performed.

The mixed aggregate manufactured through the kneading may be directly calendered, but in this case, the mixed aggregate may have to be pressed under strong pressure and high temperature to be manufactured in the form of a thin film, which may cause problems in that the density of the film becomes too high or a uniform film may not be obtained. Therefore, the mixed aggregate manufactured above is pulverized to form a powder-like electrode powder.

A device used for the pulverization is not particularly limited, but may preferably be performed by a device such as a blender or a grinder.

The pulverization may be performed at a speed of 1,000 rpm to 15,000 rpm for 5 seconds to 30 minutes, preferably at a speed of 3,000 rpm to 8,000 rpm for 30 seconds to 15 minutes. If performed within the range, sufficient pulverization is achieved, so that powder having a size appropriate for film formation may be manufactured, and a large amount of fine particles may not be produced in the mixed aggregate.

The average particle diameter of the electrode powder may be 10 $\mu$m to 3000 $\mu$m, specifically 50 $\mu$m to 1500 $\mu$m, and more specifically 100 $\mu$m to 700 $\mu$m. If the range is satisfied, an electrode composite film having a uniform thickness and density may be formed, and excellent electrode composite film properties may be secured.

Meanwhile, the electrode powder according to the present invention may additionally include fillers, although not essential, in order to suppress expansion of the electrode. The filler is not particularly limited as long as it is a fibrous material that does not cause a chemical change in a battery, but may include at least one or more selected from olefin polymers such as polyethylene and polypropylene, and fibrous materials such as glass fiber and carbon fiber.

(Step (S2))

A step for manufacturing an electrode composite film includes a step of calendering the electrode powder formed in the (S1) with a temperature difference between the electrode powder and the calendering roll of 60°C or less, wherein the temperature of the electrode powder is 30°C to 100°C, and the temperature of the calendering roll is 30°C to 90°C.

An electrode composite film may be manufactured by a calendering method in which the electrode powder according to the present invention is supplied to a calender device and the supplied material is heat-compressed using calendering roll(s) included in the calender device. Specifically, the electrode powder according to the present invention may be supplied to a calender roll and heat-compressed to manufacture a sheet-shaped electrode composite film. For example, the calendering may be performed by injecting the electrode powder into a roll press part including a plurality of the calendering rolls.

The temperature difference between the electrode powder and the calendaring roll is 60°C or less, and preferably, may be 58°C or less, 56°C or less, 55°C or less, 54°C or less, 53°C or less, 52°C or less, 51°C or less, 50°C or less, 49°C or less, 48°C or less, 47°C or less, 46°C or less, 45°C or less, 44°C or less, 43°C or less, 42°C or less, 41°C or less, 40°C or less, 39°C or less, 38°C or less, 37°C or less, 36°C or less, 35°C or less, 30°C or less, 25°C or less, 20°C or less, 15°C or less, 10°C or less, or 5°C or less. If the temperature difference between the electrode powder and the calendaring roll exceeds 60°C, the temperature difference between the electrode powder and the calendaring roll is excessive, so that excessive fiberization occurs in the electrode composite film manufactured, which may cause a problem of lowering the tensile strength. In addition, since the electrode powder is a powder in which various materials are mixed, the thermal expansion coefficients of the materials are different, so if the temperature difference is excessive, thermal stress occurs between different materials, which causes a problem of increasing the thickness deviation and weight deviation of the electrode composite film. Therefore, if the range is satisfied, the thickness deviation and weight deviation of the electrode composite film may be reduced, and the appropriate tensile strength of the electrode composite film may be maintained, thereby improving the resistance and voltage characteristics of the battery.

The temperature of the electrode powder may be 30°C to 100°C, and preferably, 35°C to 80°C, more preferably, 40°C to 80°C, further more preferably, 45°C to 80°C, further more preferably, 50°C to 80°C, further more preferably, 55°C to 80°C, further more preferably, 60°C to 80°C. If the range is satisfied, an electrode composite film having an appropriate degree of fiberization may be manufactured, so that the electrode composite film may have high tensile strength, and since the residual stress is not excessive, the thickness deviation and weight deviation of the electrode composite film may be reduced.

The temperature of the calendering roll is 30°C to 90°C, and specifically may be 35°C or higher, 40°C or higher, 45°C or higher, 55°C or higher, 60°C or higher, 85°C or lower, or 80°C or lower, preferably, 60°C to 80°C. If the temperature of the calendering roll exceeds 90°C or is lower than 30°C, a problem occurs in which the thickness deviation and weight deviation of the electrode composite film increase. Therefore, if the above range is satisfied, the thickness deviation and weight deviation of the electrode composite film may be reduced, so that a uniform and mechanically stable electrode composite film may be manufactured, and the electrode composite film does not tear during manufacturing the electrode composite film, so that the electrode composite film may be excellent in the process.

The calendering roll may be included in the roll press part, and preferably, the calendering roll may be included in multiple numbers in the roll press part, and more preferably, the calendering roll may be included in two numbers in the roll press part, and even more preferably, the two calendering rolls may be included in the roll press part so that they are disposed to face each other.

For example, the calender device may include a roll press part in which the two calendering rolls are disposed to face each other, and the roll press parts may be disposed continuously in multiple numbers. If the roll press parts are disposed continuously in multiple numbers, the temperature of each calendering roll may be the same or may satisfy the above-described temperature of the calendering roll.

In this case, each roll press part may be appropriately adjusted to have the rotation speed ratio of the two rollers within 1:1 to 1:10 independently.

In addition, the manufactured electrode composite film may be injected into the roll press part again and heat-pressed 1 to 10 times to be adjusted to an appropriate thickness.

The calendaring rolls may each independently have a surface roughness (Ra) of 0.01 $\mu$m to 0.10 $\mu$m, preferably 0.02 $\mu$m to 0.08 $\mu$m, and more preferably 0.03 $\mu$m to 0.06 $\mu$m. If the range is satisfied, defects such as tearing of the electrode composite film may be reduced, and excellent uniformity may be achieved while having excellent processability.

The force applied between the calendaring rolls may be 50 kg/cm to 500 kg/cm, preferably the force applied between the calendaring rolls may be 80 kg/cm to 400 kg/cm, and more preferably the force applied between the calendaring rolls may be 100 kg/cm to 300 kg/cm. If the range is satisfied, the gap between the rolls may be easily maintained, and excellent uniformity and tensile strength may be achieved.

The gap between the calendaring rolls may be 10 $\mu$m to 300 $\mu$m, preferably the gap between the above calendaring rolls may be 20 $\mu$m to 200 $\mu$m, and more preferably the gap between the above calendaring rolls may be 50 $\mu$m to 180 $\mu$m. If the range is satisfied, excellent uniformity and tensile strength may be achieved while having excellent processability.

**Dry Electrode**

Hereinafter, a dry electrode according to the present invention will be explained.

The dry electrode according to the present invention includes the electrode composite film of the present invention described above. Specifically, the dry electrode may include: a current collector; and an electrode composite film of the present invention, formed on the current collector.

In addition, the dry electrode according to the present invention may be manufactured by laminating the electrode composite film on one side or both sides of the current collector and laminating the resultant.

The lamination may be a step of rolling and attaching the electrode composite film onto the current collector. The lamination may be performed by a roll press method using a lamination roller, and in this case, the lamination roller may be maintained at a temperature of 20°C to 200°C.

The current collector may be any conductive material that does not cause a chemical change in the battery, and is not particularly limited. For example, the current collector may be stainless steel, aluminum, nickel, titanium, fired carbon, or aluminum or stainless steel, surface-treated with carbon, nickel, titanium, silver, or the like.

The thickness of the current collector may be 3 $\mu$m to 500 $\mu$m, but is not limited thereto. In addition, fine unevenness may be formed on the surface of the current collector to increase the adhesive strength of the composite film.

The current collector may be used by coating a conductive primer entirely or partially on the surface to lower resistance and improve adhesive strength. Here, the conductive primer may include a conductive material and a binder, and the conductive material may be any material that is conductive, but is not limited thereto, for example, a carbon-based material. The binder may include a fluorine-based (including PVDF and a PVDF copolymer) binder, an acrylic binder, and an aqueous binder, that may be dissolved in a solvent.

**Lithium Secondary Battery**

Hereinafter, a lithium secondary battery according to the present invention will be explained.

The lithium secondary battery according to the present invention includes the electrode composite film according to the present invention, and more specifically, includes the dry electrode according to the present invention. Preferably, the lithium secondary battery may be a lithium secondary battery including a positive electrode, a negative electrode, a separator, and an electrolyte, and more preferably, the dry electrode according to the present invention, a negative electrode, a separator, and an electrolyte. The negative electrode may be an electrode manufactured through a conventional wet manufacturing method, or may be an electrode manufactured through a conventional dry manufacturing method.

The separator separates the positive electrode and the negative electrode and provides a passage for lithium ions to move. A separator commonly used in lithium secondary batteries may be used without any special limitations, in particular, a separator having low resistance to ion movement of an electrolyte and excellent electrolyte moisture impregnation ability is preferable. Specifically, a porous polymer film, for example, a porous polymer film made of a polyolefin polymer such as an ethylene homopolymer, a propylene homopolymer, an ethylene/butene copolymer, an ethylene/hexene copolymer, and an ethylene/methacrylate copolymer, or a laminated structure of two or more layers thereof, may be used. In addition, a common porous nonwoven fabric, for example, a nonwoven fabric made of high-melting-point glass fibers, polyethylene terephthalate fibers, or the like may be used. In addition, a coated separator containing a ceramic component or a polymer material may be used to secure heat resistance or mechanical strength, and may optionally be used in a single-layer or multi-layer structure.

In addition, the electrolyte used in the present invention may include, but is not limited to, an organic liquid electrolyte, an inorganic liquid electrolyte, a solid polymer electrolyte, a gel-type polymer electrolyte, a solid inorganic electrolyte, a molten-type inorganic electrolyte, or the like that may be used in the manufacture of a lithium secondary battery.

Specifically, the electrolyte may include an organic solvent and a lithium salt.

As the organic solvent, any solvent that may act as a medium through which ions involved in the electrochemical reaction of a battery may move, may be used without particular limitation. Specifically, the organic solvent may include ester-based solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (where R represents a linear, branched, or cyclic hydrocarbon group having 2 to 20 carbon atoms and may include a double-bonded aromatic ring or an ether bond); amides such as dimethylformamide; dioxolanes such as 1,3-dioxolane; and sulfolanes. Among them, a carbonate-based solvent is preferable, and a mixture of a cyclic carbonate (e.g., ethylene carbonate or propylene carbonate) having high ionic conductivity and high dielectric constant that may improve the charge and discharge performance of a battery and a linear carbonate compound (e.g., ethyl methyl carbonate, dimethyl carbonate, or diethyl carbonate) having low viscosity is more preferable.

The lithium salt may be used without specific limitations as long as it is a compound that may provide lithium ions used in a lithium secondary battery. Specifically, the anion of the lithium salt may be one or more selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably within a range of 0.1 M to 4.0 M, preferably 0.5 M to 3.0 M, and more preferably 1.0 M to 2.0 M. If the concentration of the lithium salt is within the range, the electrolyte may exhibit excellent electrolyte performance because the electrolyte has appropriate conductivity and viscosity, and lithium ions may move effectively.

In addition to the electrolyte components, the electrolyte may further include one or more additives such as, for example, haloalkylene carbonate-based compounds such as difluoroethylene carbonate, pyridine, triethylphosphite, triethanolamine, a cyclic ether, ethylene diamine, n-glyme, hexaphosphoric acid triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, or aluminum trichloride, for the purpose of improving the life characteristics of the battery, suppressing the decrease in battery capacity, and improving the discharge capacity of the battery. In this case, the additives may be included in an amount of 0.1 to 10.0 wt% based on the total weight of the electrolyte.

In addition, since the lithium secondary battery according to the present invention stably exhibits excellent discharge capacity, output characteristics, and capacity retention, it is useful in portable devices such as mobile phones, notebook computers and digital cameras, and electric vehicles such as hybrid electric vehicles (HEVs).

Accordingly, according to another embodiment of the present invention, a battery module including the lithium secondary battery as a unit cell and a battery pack including the same are provided.

The battery module or battery pack may be used as a power source for one or more medium- to large-sized devices among power tools; electric vehicles including electric vehicles (EVs), hybrid electric vehicles, and plug-in hybrid electric vehicles (PHEVs); or power storage systems.

Hereinafter, examples of the present invention will be described in detail so that those skilled in the art may easily practice the present invention. However, the present invention may be achieved in various different forms and is not limited to the examples described herein.

Hereinafter, the present invention will be explained in particular through particular examples.

**Example 1: Manufacture of Electrode Composite Film**

7.6 kg of lithium iron phosphate ($LiFePO_4$, average particle diameter: 0.9 $\mu$m, BET specific surface area: 11.1 $m^2/g$) as an electrode active material, 0.12 kg of carbon black as a conductive material, and 0.28 kg of polytetrafluoroethylene (PTFE) as a fiberizable binder were added and mixed at a rotation speed of 1500 rpm for 10 minutes to prepare a composite composition.

The composite composition was injected into a kneader, and kneaded at a rotation speed of 50 rpm for 5 minutes under 1.1 atm and 150°C to prepare a mixed aggregate.

The mixed aggregate was injected into a blender and pulverized at a rotation speed of 5000 rpm for 10 minutes to prepare an electrode powder.

Thereafter, the electrode powder was heated to 80°C, and the heated electrode powder was injected into a roll press part including two calendering rolls heated to 80°C to manufacture an electrode composite film (roll diameter: 250 mm, roll speed ratio: 1/1.5 mpm).

In this case, the roll surface roughness (Ra) was 0.04 μm, the force applied between the calendering rolls was 100 kg/cm, and the gap between the calendering rolls was 180 μm.

**Comparative Example 1: Manufacture of Electrode Composite Film**

An electrode composite film was manufactured in the same manner as in Example 1, except that the electrode powder at room temperature (25°C) was injected into a calendaring roll heated to 100°C.

**Comparative Example 2: Manufacture of Electrode Composite Film**

An electrode composite film was manufactured in the same manner as in Example 1, except that the electrode powder was heated to 100°C and then the heated electrode powder was injected into a calendaring roll heated to 100°C.

**Comparative Example 3: Manufacture of Electrode Composite Film**

An electrode composite film was manufactured in the same manner as in Example 1, except that the electrode powder at room temperature (25°C) was injected into a calendaring roll heated to 150°C.

**Comparative Example 4: Manufacture of Electrode Composite Film**

An electrode composite film was manufactured in the same manner as in Example 1, except that the electrode powder at room temperature (25°C) was injected into a calendaring roll heated to 80°C.

**Comparative Example 5: Manufacture of Electrode Composite Film**

An electrode composite film was manufactured in the same manner as in Example 1, except that the electrode powder at room temperature (25°C) was injected into a calendaring roll heated to 60°C.

**Comparative Example 6: Manufacture of Electrode Composite Film**

An electrode composite film was manufactured in the same manner as in Example 1, except that the electrode powder at room temperature (25°C) was injected into a calendaring roll at room temperature (25°C).

In this case, filming was impossible for Comparative Example 6.

**Comparative Example 7: Manufacture of Electrode Composite Film**

An electrode composite film was manufactured in the same manner as in Example 1, except that the electrode powder was heated to 120°C and then the heated electrode powder was injected into a calendaring roll heated to 120°C.

The manufacturing method of the electrode composite film according to Example 1 and Comparative Examples 1 to 7 is summarized and shown in [Table 1] below.

[Table 1]

|  | Electrode powder temperature (°C) | Calendaring roll temperature (°C) | Temperature difference between electrode powder and calendaring roll (°C) |
|---|---|---|---|
| Example 1 | 80 | 80 | 0 |
| Comparative Example 1 | 25 | 100 | 75 |
| Comparative Example 2 | 100 | 100 | 0 |
| Comparative Example 3 | 25 | 150 | 125 |
| Comparative Example 4 | 25 | 80 | 55 |
| Comparative Example 5 | 25 | 60 | 35 |
| Comparative Example 6 | 25 | 25 | 0 |
| Comparative Example 7 | 120 | 120 | 0 |

**Experimental Example 1: Measurement of Thickness Deviation, Weight Deviation and Tensile Strength**

<Thickness Deviation and Weight Deviation>

The electrode composite films manufactured in Example 1 and Comparative Examples 1 to 7 were cut into 10 mm in the MD direction × 10 mm in the TD direction to make five samples. The weight and thickness of each sample were measured using an AND GR-200 scale and a TESA μ HITE precision thickness measuring instrument, respectively.
In this case, the thickness deviation and weight deviation were obtained using the aforementioned Mathematical Equations A and B, respectively.
The measurement results are shown in [Table 2] below.

<Tensile Strength>

The electrode composite films manufactured in Example 1 and Comparative Examples 1 to 7 were cut into 10 mm × 10 mm, and the tensile strength was measured using UTM equipment from ZwickRoell Co. according to ASTM 638. The pre-load was 0.01 kg/cm, and the speed was 50 mm/min.
In this case, the tensile strength was obtained as the maximum value (MPa) of a force applied until the sample did not break.
The measurement results are shown in [Table 2] below.

[Table 2]

|  | Thickness deviation (%) | Weight deviation (%) | Tensile strength (MPa) |
|---|---|---|---|
| Example 1 | 0.94 | 0.99 | 0.58 |
| Comparative Example 1 | 3.03 | 3.1 | 0.38 |
| Comparative Example 2 | 1.55 | 1.51 | 0.45 |
| Comparative Example 3 | 3.83 | 3.93 | 0.34 |
| Comparative Example 4 | 1.94 | 1.8 | 0.31 |
| Comparative Example 5 | 2.38 | 2.91 | 0.29 |
| Comparative Example 6 | - | - | - |
| Comparative Example 7 | 1.65 | 1.72 | 0.42 |

As confirmed in [Table 2] above, in the case of Example 1, it can be found that the thickness deviation and weight deviation are low compared to Comparative Examples 1 to 7.
That is, it can be found that in order to achieve the thickness deviation and weight deviation intended by the present invention, the temperature difference between the electrode powder and the calendaring roll is required to be appropriately controlled, and at the same time, the temperature of each of the electrode powder and the calendaring roll is required to be appropriately controlled.

**Experimental Example 2: Evaluation of Defects in Electrode Composite Films**

The electrode composite films manufactured by Example 1 and Comparative Examples 1 to 7, and the appearance of the calendaring rolls used in the manufacture were observed to evaluate the defects in the electrode composite films.
Specifically, if there were no defects at all, it was evaluated as X, if contamination by the electrode composite film occurred on the surface of the calendering roll, if tearing of the electrode composite film occurred to some extent, or if uneven wave patterns occurred to some extent, it was evaluated as △, and if contamination by the electrode composite film occurred excessively on the surface of the calendering roll, if tearing of the electrode composite film occurred excessively, or if uneven wave patterns occurred severely, it was evaluated as ○. The evaluation results are shown in [Table 3] below.

[Table 3]

|  | Evaluation of Defects in Electrode Composite Film |
|---|---|
| Example 1 | X |

(continued)

|  | Evaluation of Defects in Electrode Composite Film |
|---|---|
| Comparative Example 1 | Δ |
| Comparative Example 2 | Δ |
| Comparative Example 3 | ○ |
| Comparative Example 4 | Δ |
| Comparative Example 5 | ○ |
| Comparative Example 6 | Filming was impossible |
| Comparative Example 7 | X |

As confirmed from [Table 3] above, in the case of Example 1, compared to the Comparative Examples, no contamination occurred on the roll surface, no problem occurred with the electrode composite film being torn off, and no uneven wave pattern occurred.

**Claims**

1. An electrode composite film comprising: an electrode active material comprising lithium iron phosphate; a conductive material; and a fiberizable binder,

   wherein a thickness deviation obtained from thickness measurement results at a plurality of arbitrary points is 1.5% or less, and
   a weight deviation obtained from weight measurement results at a plurality of arbitrary points is 1.5% or less.

2. The electrode composite film according to claim 1, wherein the thickness deviation is 1.0% or less.

3. The electrode composite film according to claim 1, wherein the weight deviation is 1.0% or less.

4. The electrode composite film according to claim 1, wherein a tensile strength of the electrode composite film is 0.30 MPa to 1.30 MPa.

5. The electrode composite film according to claim 1, wherein the lithium iron phosphate is represented by the following Formula 1:

   [Formula 1] $\quad\quad Li_{1+x1}[Mn_{1-a1-b1}Fe_{a1}M^1_{b1}]PO_4$

   in Formula 1, $M^1$ comprises one or more selected from the group consisting of Al, Mg, Ni, Co, Ti, Ga, Cu, V, Nb, Zr, Ce, In, Zn and Y, $-0.1 \leq x1 \leq 0.1$, $0.5 \leq a1 \leq 1.0$, and $0.0 \leq b1 \leq 0.1$.

6. The electrode composite film according to claim 1, wherein an average particle diameter of the electrode active material is 0.1 $\mu$m to 3.0 $\mu$m.

7. The electrode composite film according to claim 1, wherein the electrode active material has a BET specific surface area of 0.5 $m^2$/g to 30 $m^2$/g.

8. The electrode composite film according to claim 1, wherein the fiberizable binder comprises polytetrafluoroethylene (PTFE).

9. A method for manufacturing an electrode composite film, the method comprising:

   (S1) a step of preparing an electrode powder comprising an electrode active material comprising lithium iron phosphate, a conductive material and a fiberizable binder; and
   (S2) a step of calendering the electrode powder with a temperature difference between the electrode powder and a calendering roll of 60°C or less,

wherein the temperature of the electrode powder is 30°C to 100°C, and
the temperature of the calendering roll is 30°C to 90°C.

10. The method for manufacturing an electrode composite film according to claim 9, wherein the temperature of the electrode powder is 60°C to 80°C.

11. The method for manufacturing an electrode composite film according to claim 9, wherein the temperature of the calendering roll is 60°C to 80°C.

12. The method for manufacturing an electrode composite film according to claim 9, wherein a surface roughness (Ra) of the calendering roll is 0.01 $\mu$m to 0.10 $\mu$m.

13. The method for manufacturing an electrode composite film according to claim 9,

wherein the calendering is performed by injecting the electrode powder into a roll press part comprising a plurality of the calendering rolls, and
a force applied between the calendering rolls is 50 kg/cm to 500 kg/cm.

14. The method for manufacturing an electrode composite film according to claim 9,

wherein the calendering is performed by injecting the electrode powder into a roll press part comprising a plurality of the calendering rolls, and
a gap between the calendering rolls is 10 $\mu$m to 300 $\mu$m.

15. A lithium secondary battery comprising the electrode composite film of claim 1.

## INTERNATIONAL SEARCH REPORT

| International application No. |
| --- |
| **PCT/KR2024/015140** |

| A. | CLASSIFICATION OF SUBJECT MATTER |
| --- | --- |

**H01M 4/131**(2010.01)i; **H01M 4/1391**(2010.01)i; **H01M 4/525**(2010.01)i; **H01M 4/505**(2010.01)i; **H01M 4/62**(2006.01)i; **H01M 4/04**(2006.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/131(2010.01); H01G 11/86(2013.01); H01M 10/052(2010.01); H01M 4/02(2006.01); H01M 4/04(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 전극 합재 필름(electrode mixture film), 리튬 철 인산화물(lithium iron phosphate), 도전재(conductive material), 바인더(binder), 섬유화(fibrosis), 두께 편차 (thickness deviation), 무게 편차(weight deviation), 분체(powder), 캘린더링(calendaring), 온도(temperature)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0025359 A (LG ENERGY SOLUTION, LTD.) 21 February 2023 (2023-02-21)<br>See claims 1, 6, 7 and 9; paragraphs [0010], [0064], [0119], [0167] and [0168]; and table 1, example 1. | 1-15 |
| A | KR 10-2022-0052852 A (LG ENERGY SOLUTION, LTD.) 28 April 2022 (2022-04-28)<br>See claims 1 and 2; and paragraphs [0136], [0185]-[0187] and [0205]. | 1-15 |
| A | CN 113675362 A (SVOLT ENERGY TECHNOLOGY COMPANY LIMITED) 19 November 2021 (2021-11-19)<br>See abstract; claims 1-10; and paragraphs [0064] and [0081]-[0085]. | 1-15 |
| A | CN 115881888 A (ZHENGZHOU INSTITUTE OF EMERGING INDUSTRIAL TECHNOLOGY) 31 March 2023 (2023-03-31)<br>See abstract; and claims 1-7. | 1-15 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 January 2025** | **13 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 769 517 A1**

**INTERNATIONAL SEARCH REPORT**

| International application No. |
| --- |
| **PCT/KR2024/015140** |

**C.  DOCUMENTS CONSIDERED TO BE RELEVANT**

| Category* | Citation of document, with indication, where appropriate, of the relevant passages | Relevant to claim No. |
| --- | --- | --- |
| A | WO 2023-055644 A1 (LICAP TECHNOLOGIES, INC.) 06 April 2023 (2023-04-06)<br>See abstract; and claims 1-35. | 1-15 |

Form PCT/ISA/210 (second sheet) (July 2022)

16

## INTERNATIONAL SEARCH REPORT
### Information on patent family members

International application No.

**PCT/KR2024/015140**

| Patent document cited in search report | | | Publication date (day/month/year) | Patent family member(s) | | | Publication date (day/month/year) |
|---|---|---|---|---|---|---|---|
| KR | 10-2023-0025359 | A | 21 February 2023 | None | | | |
| KR | 10-2022-0052852 | A | 28 April 2022 | CN | 116529899 | A | 01 August 2023 |
| | | | | EP | 4216298 | A1 | 26 July 2023 |
| | | | | JP | 2023-547117 | A | 09 November 2023 |
| | | | | KR | 10-2024-0127326 | A | 22 August 2024 |
| | | | | KR | 10-2696472 | B1 | 19 August 2024 |
| | | | | US | 2024-0014367 | A1 | 11 January 2024 |
| | | | | WO | 2022-086247 | A1 | 28 April 2022 |
| CN | 113675362 | A | 19 November 2021 | None | | | |
| CN | 115881888 | A | 31 March 2023 | None | | | |
| WO | 2023-055644 | A1 | 06 April 2023 | EP | 4409649 | A1 | 07 August 2024 |
| | | | | JP | 2024-533736 | A | 12 September 2024 |
| | | | | KR | 10-2024-0054355 | A | 25 April 2024 |
| | | | | US | 2023-0106377 | A1 | 06 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230133821